# EUROPEAN PATENT SPECIFICATION

(11) **EP 2 712 806 B1**
(45) Date of publication and mention of the grant of the patent: **11.05.2016**
(21) Application number: 12186463.1
(22) Date of filing: 28.09.2012
(51) Int. Cl.: B64D 13/06, B64D 11/00

(54) **A partition for a vehicle**
Eine Trennwand für ein Fahrzeug
Une partition pour véhicule

(43) Date of publication of application: 02.04.2014
(73) Proprietor: Airbus Operations GmbH, 21129 Hamburg (DE)
(72) Inventor: Kraus, Fabian, 22607 Hamburg (DE); Martens, Benjamin, 22769 Hamburg (DE); Dreyhaupt, Michael, 22559 Hamburg (DE); Schult, Jens, 21435 Stelle (DE)

(56) References cited:
- GB-A- 2 105 987
- US-A- 3 113 501
- US-A1- 2005 011 139
- US-A1- 2012 043 028

## Description

The present invention relates to a partition for dividing a vehicle compartment into two parts, in particular, a collapsible partition for thermally insulating one part of a vehicle compartment from another.

There often arises a need to divide a vehicle compartment into two or more parts, and to provide different thermal conditions in each part. For example, in a military or freighter aircraft, it is often necessary to accommodate personnel in a first part of a compartment and store equipment in a second part of the compartment. In this example, it is necessary to maintain the first part of the compartment at a suitable temperature for personnel, whereas it may be unnecessary or an inefficient use of energy to heat or cool the second part of the compartment to the same temperature. Consequently, the temperature in the second part of the compartment is normally unregulated and therefore normally significantly colder than the first part of the compartment in flight.

It is known to use a partition between the first and second parts of such a compartment within an aircraft to provide some degree of insulation between them. Previously considered partitions with good thermal insulation performance are heavy and cumbersome, and so they add a weight penalty to the aircraft. They may also be difficult to install and uninstall within the compartment. Previously considered light-weight partitions may fail to provide sufficient thermal insulation, and so they result in a steep temperature gradient at either side of the partition when there is a temperature difference between the first and second parts of the compartment, and a non-uniform temperature distribution within at least the first part of the compartment. A non-uniform temperature distribution could lead to excessively high temperatures in some areas and excessively low temperatures in others as a temperature control system typically attempts to maintain a predetermined mean temperature. The poor insulation performance of such light-weight partitions may lead to inefficient thermal regulation of the first part, and may fail to satisfy thermal condition requirements for the compartment contents, whether that is personnel, cargo or other articles.

US 2005/011139 A1 describes a general partition system including a flexible, expandable partition and a fluid delivery system configured to deliver a fluid to a space adjacent to the partition.

GB 2 105 987 A describes a flexible smoke and fire resistant screen which is used for closing an opening, such as a corridor in a building, to provide a barrier against fire.

US 2012/0043028 A1 describes a hanging partition with flexible panels for use as a cabin curtain in an aircraft.

It is therefore desirable to provide a partition and vehicle compartment control arrangement for better insulating one part of a vehicle compartment from another.

The present invention relates to a vehicle compartment control arrangement according to claim 1 and a method of partitioning a vehicle compartment according to claim 10. There is provided a partition for dividing a vehicle compartment into two parts, the partition comprising a duct along which a control fluid may be conveyed to influence the temperature
of the partition and thereby the heat transfer to or from at least one of the two parts of the compartment.

There is provided a collapsible partition having a collapsed configuration and an installed configuration in which it is arranged to divide a vehicle compartment into two parts, the partition comprising: a ducted portion comprising a duct, the duct extending within the partition from a first opening at a first end of the duct to a second opening at a second end of the duct; wherein the duct is arranged to convey
a control fluid for controlling the heat transfer between the partition and at least one of the two parts of the compartment.

The partition may form a substantially planar barrier in the installed configuration. The partition may have a substantially rectangular cross-section in the installed configuration. The partition may have more than one installed configuration such that it can conform to the profile of more than one different compartment, or to different parts of the same compartment. The duct may be arranged to conform to the profile of the partition. The duct may at each point be substantially tangential to the profile of the partition, as opposed to being normal or perpendicular to the profile of the partition. For example, the duct may be substantially planar in the installed configuration in embodiments of the invention in which the partition is substantially planar in the installed configuration, and the duct may conform to the curvature or uneven profile of the partition when the partition is curved or uneven respectively.

The ducted portion may comprise a plurality of ducts, each extending within the partition and arranged to convey the control fluid from a first opening at a first end of the duct to a second opening at a second end of the duct. The ducts may be parallel to one another. The ducts may be spaced apart from one another. The ducts may be arranged side by side.

The ducted portion may extend over a part of the partition. The ducted portion may extend over at least fifty percent, at least sixty percent, at least seventy percent, at least eighty percent, at least ninety percent or one hundred percent of the area of the partition.

The ducted portion may extend over substantially the whole of the partition.

The partition may further comprise: a support arranged to be coupled to the compartment; and a duct wall which at least partly defines the duct, wherein the duct wall is supported by the support. The duct may be at least partly defined by the duct wall and partly defined by the support. Where there is a plurality of ducts, the ducts may be at least partly defined by separate portions of the duct wall. The ducts may be partly defined by separate portions of the support.

The support may be biased to the installed configuration by biasing means such as a spring.

The support may comprise one or more panels to which the duct wall may be mounted or suspended. The panels may be directly or indirectly coupled to one another. The panels may be flexible. A plurality of panels may be provided parallel to one another. The support may comprise one or more stiff articulated panels. The support panel may comprise a web. The support may extend over substantially the entire of the area of the partition or over an area which is less than the entire area of the partition. Ducts may be provided on one or both sides of the support panel or panels.

The support may comprise a support structure from which the duct wall can be suspended. For example, the support may comprise one or more beams or a collapsible frame from which the duct wall or walls can be suspended. The support may be arranged to pass through the ducts and/or the duct walls. The support may clamp the duct wall in position.

The support may be composed of a first material, and the duct wall may be composed of a second different material. The first material may be stronger than the second material. The first material may have a higher tensile strength than the second material. The second material may be less dense than the first material. The support may be of a first thickness, and the duct may be of a second different thickness. The first thickness may be greater than the second thickness.

The partition may be at least partly composed of textile materials or a textile material. The partition may include stiffened materials, beams, or stiff articulated panels. For example, the partition may comprise a support in the form of a beam and a duct wall composed of textile materials. The partition may comprise textile panels provided with stiffening elements. The duct wall may be substantially entirely composed of textile materials. The partition may be substantially entirely composed of textile materials. The partition may be entirely composed of textile materials.

The partition may have at least one collapsed configuration. For example, the partition may be foldable such that it can occupy less space in a collapsed configuration than in the installed configuration.

The compartment may further comprise a control fluid exhaust inlet arranged to be coupled to the second opening of the duct and to receive the flow of control fluid from the duct.

The compartment comprises a plurality of control fluid outlets and a plurality of corresponding control fluid exhaust inlets.

The compartment has a plurality of installation positions in which the partition can be installed in the installed configuration. The partition may be moveable within the compartment.

The compartment may further comprise a floor and the control fluid outlet may be located in the floor. The floor may further comprise an under-floor channel. The under-floor channel may be arranged to provide a heating or cooling effect to at least one part of the compartment. The under floor channel may provide a heating or cooling effect to the first part of the compartment.

The compartment comprises a plurality of control fluid outlets. A subset of the control fluid outlets is associated with a subset of the installation positions.

There may be a plurality of rows of control fluid outlets. One or more control fluid outlets within a row may be selectively opened and couple to one or more corresponding ducts of the partition respectively. The position of the rows may be aligned with the installation positions of the partition within the compartment. The compartment control arrangement may further comprise one or more flexible hoses, each arranged to extend between a control fluid outlet and one or more ducts of the partition. The one or more flexible hoses may be retractable within the under-floor channel and extendible to couple with a duct of the partition.

The compartment control arrangement may further comprise a controller configured to control the temperature of the control fluid relative to a first part reference temperature.

The temperature of the control fluid may be controlled at a source of the control fluid, at the control fluid outlet, or at any point therebetween. The temperature of the control fluid may be controlled by variable mixing of a high temperature fluid and a low temperature fluid.

The first part reference temperature may be the mean temperature of the first part of the compartment, a temperature measured at a sensor within the first part, a predicted temperature of the first part or a desired temperature of the first part. The controller may control the control fluid temperature to be substantially the same as the first part reference temperature, or to be offset from the first part reference temperature.

The controller may be configured to control the temperature of the control fluid relative to the first part reference temperature and a second part reference temperature, such that: when the first part reference temperature is greater than the second part reference temperature, the control fluid temperature is greater than the second part reference temperature; and when the first part reference temperature is less than the second part reference temperature, the control fluid temperature is less than the second part reference temperature.

The second part reference temperature may be the mean temperature of the second part of the compartment, a temperature measured at a sensor within the second part, a predicted temperature of the second part or a desired temperature of the second part.

The controller may be configured to control the temperature of the control fluid such that: when the first part reference temperature is greater than the second part reference temperature, the control fluid temperature is greater than the first part reference temperature; and when the first part reference temperature is less than the second part reference temperature, the control fluid temperature is less than the first part reference temperature.

The controller may be configured to control the temperature of the control fluid such that it is closer to the first part reference temperature than the second part reference temperature. The controller may be configured to set the ratio of the difference between the temperature of the control fluid and the first part reference temperature relative to the difference between the temperature of the control fluid and the second part reference temperature to be less than 1:2, less than 1:4, less than 1:6, less than 1:8 or less than 1:10.

The controller may be configured to control the temperature of the control fluid such that it is substantially the same as the first part reference temperature, such that the heat transfer between the partition and the first part of the compartment is minimised.

The controller may be configured to control the temperature and flow rate of the control fluid such that the change of temperature of the control fluid as it passes through the duct of the partition is significantly less than the difference in temperature between the first part reference temperature and the second part reference temperature. The controller may be configured to control the temperature and flow rate of the control fluid such that the change of temperature of the control fluid as it passes through the duct of the partition is less than 50% of the difference in temperature between the first part reference temperature and the second part reference temperature. It may be less than 40%, less than 30%, less than 20%, or less than 10%.

The compartment control arrangement may also include a control fluid source being in connection with the control fluid outlet. The control fluid may be air.

The partition may be in the installed configuration such that the compartment is divided into a first part and a second part.

There is also provided a vehicle comprising the vehicle compartment control arrangement. The vehicle may be an aircraft. The control fluid may be at least partly supplied from an engine bleed flow of the aircraft and/or an exhaust air flow from an avionics compartment of the aircraft.

The method may further comprise the steps of: controlling the temperature of the control fluid relative to the first part reference temperature and a second part reference temperature, such that: when the first part reference temperature is greater than the second part reference temperature, the control fluid temperature is greater than the second part reference temperature; and when the first part reference temperature is less than the second part reference temperature, the control fluid temperature is less than the second part reference temperature.

The method may further comprise, separately or in combination, the steps of:
controlling the temperature of the control fluid relative to the first part reference temperature and/or the second part reference temperature;
controlling the ratio of the temperature difference between the control fluid and the first part reference temperature relative to the temperature difference between the control fluid and the second part reference temperature; and
controlling the temperature and flow rate of the control fluid to control the change of temperature of the control fluid as it passes through the duct of the partition.

The invention may comprise any combination of the features and/or limitations referred to herein, except combinations of such features as are mutually exclusive.

Embodiments of the present invention will now be described, by way of example, with reference to the accompanying drawings, in which:
Figure 1 schematically shows a front portion of an aircraft fuselage with a cut-away showing a partition according to the invention installed within an aircraft compartment;
Figure 2 schematically shows in cross-sectional side view of the compartment and partition of Figure 1.
Figure 3 schematically shows the partition of Figure 1;
Figure 4 schematically shows the partition of Figure 1 installed above the floor of an aircraft compartment;
Figure 5 schematically shows two parts of a compartment separated by a partition according to the invention.
Figure 6 schematically shows two parts of a compartment separated by a partition known in the prior art;
Figure 7 schematically shows a partition according to the invention comprising a support composed of rigid articulated panels.
Figure 8 schematically shows a partition according to the invention comprising a beam support from which a series of ducts are suspended.

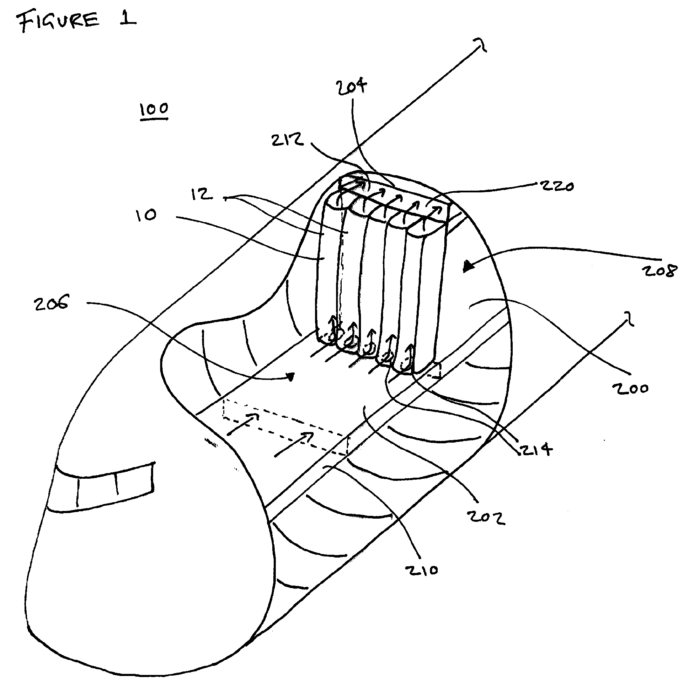

Figure 1 shows a cutaway view of the forward section of a fuselage of an aircraft 100, revealing a compartment 200 provided with a collapsible partition 10 dividing the compartment 200 into a first forward part 206 and a second aft part 208.

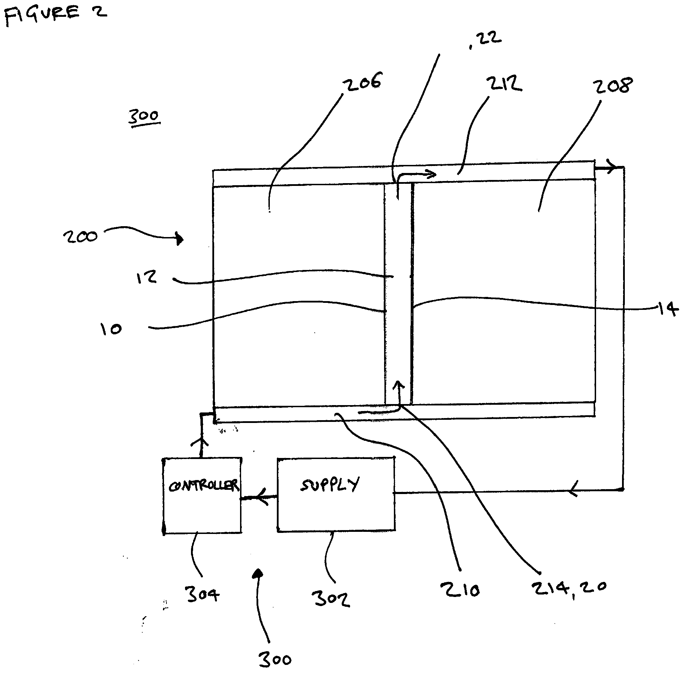

As shown in Figure 2, a control fluid flow system 300 for the compartment 200 comprises a control fluid supply 302 which provides control fluid via a controller 304 to flow into an under-floor channel 210, through the partition 10 into a ceiling channel 212, and returning as an exhaust flow to the control fluid supply 302.

The partition 10 is arranged to convey the control fluid to control the heat transfer between the partition 10 and at least one of the first and second parts 206, 208 of the compartment 200.

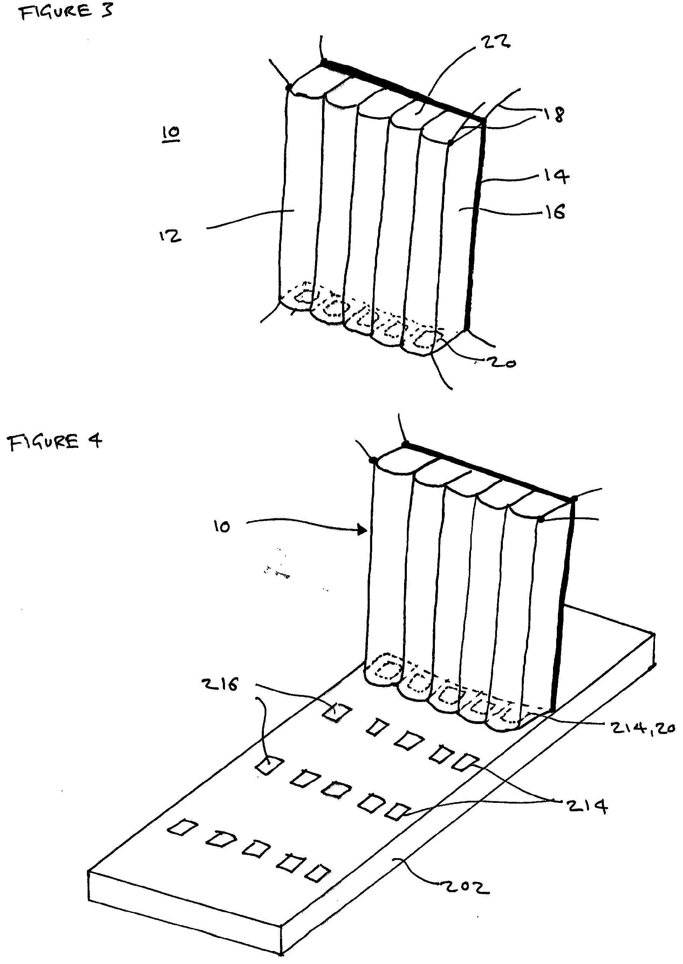

With reference to Figure 3, the partition 10 comprises a support in the form of a back panel 14 and a duct wall 16, defining therebetween a series of ducts 12 longitudinally extending side by side along a first side of the back panel 14.

The back panel 14 is composed of a strong textile material. The back panel 14 is flexible, but sufficiently strong to support the weight of the duct walls 16. The duct walls are made of a textile material which is more light-weight than the material of the back panel. The duct walls 16 are attached to the back panel 14 by stitching, although it will be appreciated that any suitable means of attachment may be used.

Each duct 12 extends longitudinally along the back panel 14 from a first opening 20 to a second opening 22. In this embodiment, each duct 12 is defined by both the back panel 14 and the duct walls 16. However, in other embodiments each duct 12 may be defined entirely by the duct walls 16.

The partition 10 has an installed configuration and a collapsed configuration (not shown). In the installed configuration, the partition 10 is erected to form a barrier which can be used to divide a compartment 200 into two parts 206, 208. As shown in Figures 1 and 3-4, the partition 10 is substantially planar and vertical in the installed configuration, although it will be appreciated that in other embodiments other profiles and orientations may be used.

In the installed configuration, each duct 12 extends vertically from the first opening 20 at a lower edge of the partition 10 to the second opening 22 at an upper edge of the partition 10. Each duct 12 is able to convey a control fluid from the first opening 20 to the second opening 22. The ducts 12 and duct walls 16 are arranged such that, in the installed configuration when the partition divides a compartment 200 into two parts 206, 208, the duct walls are exposed to the air of the first part 206 of the compartment 200, so as to influence the heat transfer between the first part 206 of the compartment 200 and the partition 10.

In the collapsed configuration, the partition is folded several times for storage.

Figure 4 shows the partition 10 together with the floor 202 of the vehicle compartment 200 shown in Figure 1. The compartment 200 comprises the floor 202, two side walls (not shown), two end walls (not shown), a ceiling 204, and attachment portions (not shown) in the form of loops for attaching to the partition 10. The attachment of the partition 10 and the walls should be as air tight as possible. To allow quick installation and de-installation, an attachment by hook-and-loop or snap fasteners is an advantageous option.

The partition 10 is provided with attachment portions 18 in the form of straps for attaching to the loops. The straps 18 extend from the four upper corners and four lower corners of the partition 10, i.e. the two upper and two lower corners of the back panel 14 and the two upper and two lower corners of the duct wall 16. These straps 18 are secured around the loops to retain the partition 10 in the installed configuration.

The floor 202 comprises an under-floor channel 210 having an inlet (not shown) connected to the control fluid supply 302 such that in use there is a flow of control fluid through the under-floor channel 210. The floor 202 further comprises a plurality of longitudinally spaced rows of control fluid outlets 214, each row having the same number of control fluid outlets 214 as the number of ducts 12 of the partition 10. Each control fluid outlet 214 is provided with a removable plug 216 such that it can be selectively opened or closed.

The ceiling 204 comprises a ceiling channel 220 having an outlet connected to the control fluid supply 302 such that in use an exhaust flow of control fluid flows from the ceiling channel 220 back to the control fluid supply 302. The ceiling 204 comprises a plurality of longitudinally spaced rows of control fluid exhaust inlets (not shown), each row having the same number of control fluid exhaust inlets as the number of ducts 12 of the partition 10. Each control fluid exhaust inlet is provided with a removable plug such that it can be selectively opened or closed. In other embodiments, the removable plugs for the floor 202 and ceiling 204 could be replaced with caps, flaps, or slideable or hinged doors.

The plurality of rows of control fluid outlets 214 and the plurality of rows of control fluid exhaust inlets provided in the floor 202 and ceiling 204 of the compartment 200 respectively allow the partition 10 to be installed in the compartment 200 at any one of a plurality of different installation positions.

The first opening 20 of each duct 12 is coupled to a control fluid outlet 214 by any suitable means. In this example embodiment, the duct 12 and outlet 214 are provided with co-operating connectors. For example, the duct 12 and outlet 214 may be coupled by threaded connectors, push-fit connectors, cooperating clips or a latching mechanism. The outlet 214 may have a connector protruding from the floor 202 about which a flexible elastic seal from the duct 12 may be secured. The connector of the outlet 214 may be provided on one end of an extendible hose connected to the outlet and/or retractably extending from the under-floor channel 210 through the outlet 214.

In a very simple and advantageous embodiment (not shown), the coupling of the partition 10 with the floor 202 is neither fixed by a threaded connection nor by protruding outlets. This is, because the floor should remain rather flat when the partition 10 is not in the installed configuration - still keeping in mind that the installation shall be as easy as possible. Preferably, the coupling could be simply realized by the partition 10 overlapping or covering the outlets 214 sufficiently. A re-inforcement at the bottom end of the partition 10 may keep the necessary shape of the partition 10 to overlap or cover the outlets 214. In another more sophisticated embodiment (not shown), spring loaded flaps may be arranged at the outlets 214 in the floor 202, wherein said flaps are closed when the partition 10 is not in the installed configuration and can be mechanically opened when the partition 10 is in the installed configuration to allow for a `klick-fix' connection between the lower part of partition 10 and outlets 214.

The second opening 22 of each duct 12 is coupled to a control fluid exhaust inlet by any suitable means, such as those described above with reference to the first opening 20 of each duct and the control fluid outlet 214.

Referring back to Figure 2, the control fluid flow system 300 includes a control fluid supply 302, a controller 304 configured to control the temperature and flow rate of the control fluid, and the flow path through the under-floor channel 210, partition 10 and the ceiling channel 212. The control fluid supply 302 includes a high temperature fluid supply, a low temperature fluid supply and an exhaust flow supply of recirculated control fluid from the ceiling channel 212. The high temperature fluid supply is provided by an engine bleed flow; although in other embodiments it can be provided by exhaust air from the avionics compartment or another source. The controller 304 is configured to control the ratio of the fluid supplies to set both the temperature and the flow rate of the control fluid supplied to the partition 10. In other embodiments, the controller may use a heat exchanger to set the temperature of the control fluid.

The temperature of the control fluid is set before it enters the under-floor channel 210, and the inlet to the under-floor channel 210 is provided at the end of the compartment 200 on the side of the first part 206 of the compartment 200, such that the flow of control fluid through the under-floor channel 210 can provide a cooling or heating effect to the first part 206 of the compartment 200 as desired. In embodiments where the first part 206 of the compartment 200 is provided at the other end of the compartment 200, An alternative flow inlet to the under-floor channel 210 is provided at the other end of the under-floor channel such that the compartment 200 can be configured with the first part 206 at either end of the compartment 200, and such that the under-floor heating or cooling effect is possible in all configurations of the compartment 200.

The controller 304 is configured to control the temperature of the control fluid based on reference temperatures for the first and second parts 206, 208 of the compartment 200. The controller 304 provides several different ways of setting the reference temperatures. The compartment 200 comprises a plurality of temperature sensors throughout the compartment 200 which can be used to determine the mean temperature in each part 206, 208 of the compartment 200, depending on where the partition 10 is placed. The controller 304 also has manual inputs for setting a desired or a predicted temperature for each part 206, 208. Further temperature sensors are located in the under-floor channel 210 and in the ceiling channel 212 so that the controller 304 can monitor the change in temperature of the control fluid as it passes through the partition 10.

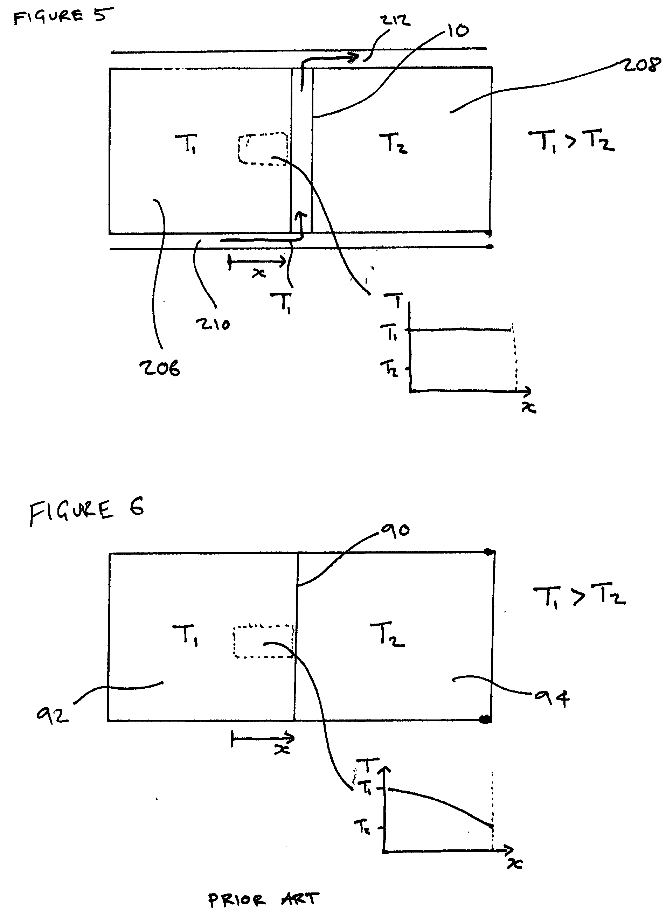

In use, the partition 10 is installed in the compartment 200 and the controller setup according to the operational thermal requirements of the compartment 200. In the example embodiment shown in Figure 5, the first part 206 is the forward part of the compartment 200 (left side in Figure 5) and is used for accommodating personnel, whereas the second part 208 is the aft part of the compartment 200 and is used for accommodating equipment. The second part 208 will therefore normally be significantly cooler than the first part 206 during flight. An installation position for the partition 10 within the compartment 200 is selected based on the amount of space required for the personnel and equipment respectively, and a row of control fluid outlets 214 and control fluid exhaust inlets are selected accordingly, and opened by removal of the plugs.

The partition 10 is removed from storage in the collapsed configuration and is unfolded. The straps 18 are tied to the loops of the compartment 200 at the installation position to firmly secure the partition 10 in place such that it extends from the left wall to the right wall, and from the floor 202 to the ceiling 204 of the compartment 200. The first openings 20 of the ducts 12 are then coupled to the control fluid outlets 214 by way of the co-operating connectors. The second openings 22 of the ducts 12 are also coupled to the control fluid exhaust inlets using similar connectors.

The controller 304 is then provided with the first and second reference temperatures. Temperature sensors located in the first and second parts 206, 208 of the compartment 200 are assigned within the controller 304 to the first and second parts 206, 208 respectively, either directly or by defining the installation position of the partition 10 within the controller 304. In this example embodiment, the controller 304 is set to control the temperature of the control fluid to match the mean temperature of the first part 206 as measured by the first part temperature sensors. The controller 304 is set to control the flow rate of the fluid such that the change of temperature of the control fluid as it passes through the partition 10 is no more than 10% of the difference between the first and second reference temperatures (the mean temperatures of the first and second parts 206, 208), such that a large temperature difference between the first and second parts 206, 208 does not significantly alter the temperature of the control fluid in the partition 10, and therefore the insulation performance of the partition 10.

With the control fluid system 300 activated, fluid flows from the three control sources are mixed and controlled to flow into the under-floor channel 210 at the desired temperature and flow rate. The control fluid flows below the first part 206 of the compartment 200 through the under-floor channel 210, through the open control fluid outlets 214 and up into the ducts 12 of the partition 10. The control fluid is substantially the same temperature as the mean temperature of the first part 206 of the compartment 200, and flows through the partition 10 at a sufficiently high flow rate that it does not undergo a significant temperature change along the length of the partition 10. The temperature difference, and therefore the heat transfer, between the first part 206 and the partition 10 is minimised, and so there is a substantially flat temperature gradient in the first part 206 adjacent to the partition, as shown in Figure 5, despite the second part 208 of the compartment 200 being significantly cooler than the first 206 in flight (T₁>T₂ in Figure 5). The partition 10 therefore insulates the first part 206 of the compartment 200 from the second part 208 of the compartment 200 by conveying the control fluid through the ducts 12.

In contrast and as shown in Figure 6, previously known light-weight partitions 90 fail to provide adequate thermal insulation, resulting in a large temperature gradient in the first part 92 of a compartment adjacent to the partition 90, and an unwanted transfer of heat between the first part 92 and a second part 94 of the compartment, resulting in inefficient thermal regulation of the compartment conditions.

Referring back to Figure 5, the control fluid flows from the ducts 12 of the partition 10 into the ceiling 204, and back into the control fluid flow system 300 to the control fluid supply 302. In other embodiments, the control fluid may flow from the ceiling channel 212 directly into the first or second parts 206, 208.

After use, the partition 10 is uninstalled by disconnecting the ducts 12 from the control fluid outlets 214 and control fluid exhaust inlets, and detaching the straps 18 from the loops. The partition 10 is then folded and stored away.

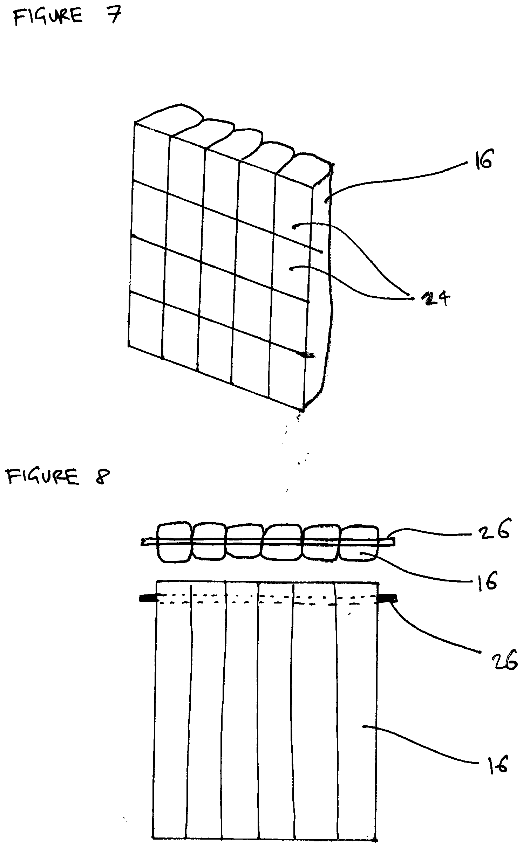

Figure 7 shows an alternative embodiment of a partition 10, which differs from that described above in that the back panel 14 comprises a grid of stiff articulated panels 24. The panels can be folded on top of one another to transform the partition 10 from the installed configuration to the collapsed configuration and vice versa.

Figure 8 shows a further alternative embodiment of a partition 10 in which the support is in the form of a beam 26 extending transversely through holes in the duct walls 16. The duct walls 16 are suspended from the beam 26 and completely define the ducts 12. The duct walls 16 are composed of a textile material. Further beams 26 or other attachment positions could be provided at other positions along the length of the partition 10 in order to secure it in the installed configuration. The partition 10 can be transformed to the collapsed configuration by removing the beam 26 and folding the duct walls 26. In this embodiment, the compartment 200 comprises co-operating receiving portions to which the ends of the beam 26 can be attached.

Although embodiments of the invention show the partition as substantially planar in the installed configuration, it will be appreciated that the partition may have a curved and/or non-uniform profile in the installed configuration.

Although embodiments of the invention have been shown in which ducts are provided on one side of a support, it will be appreciated that in other embodiments ducts may be provided on both sides of a support. For example, two separate sets of ducts could be provided on opposite sides of a support. The two sets of ducts could be connected to separate control fluid outlets supplying control fluids of different temperatures, such that the heat transfer between the partition and each of the first and second parts of the compartment could be controlled independently. Further, two separate partitions could be used back-to-back to achieve the same effect.

Although embodiments of the invention have been described in which the number of control fluid outlets arranged to be connected to the partition at one time is equal to the number of ducts (i.e. one control fluid outlet per duct), it will be appreciated that in other embodiments one control fluid outlet could be connected to several ducts, or a plurality of control fluid outlets could be connected to one duct.

Although embodiments of the invention have been described in which the partition is attached to the compartment via attachment portions in the form of loops, it will be appreciated that other forms of attachment are possible. For example, the support of the partition may be coupled to the walls of the compartment by way of an adhesive, a railing or other fastening means.

The support may be a free-standing structure which is coupled to the compartment by virtue of standing on the floor of the compartment. The support may be arranged to fit snugly within the profile of the compartment in the installed configuration, such that it is coupled to the compartment by virtue of a close fit. The support may comprise biasing means such as a spring which bias the partition to the installed configuration. The biasing force may be sufficiently strong to hold the partition in place against the walls of the compartment.

## Claims

1. A vehicle compartment control arrangement comprising:
a collapsible partition (10) having a collapsed configuration and an installed configuration in which it is arranged to divide a vehicle compartment (200) into two parts (206, 208), and
a vehicle compartment (200),
wherein the partition comprises:
a ducted portion comprising at least a duct (12), the duct (12) extending within the partition (10) from a first opening (20) at a first end of the duct (12) to a second opening (22) at a second end of the duct (12);
wherein the duct (12) is arranged to convey a control fluid for controlling the heat transfer between the partition (10) and at least one of the two parts (206, 208) of the vehicle compartment (200);
**characterised in that**
the vehicle compartment (200) comprises:
a plurality of control fluid outlets (214) each arranged to be selectively coupled to the first opening (20) of the duct (12) and to provide a flow of control fluid into the duct (12);
wherein in the installed configuration of the collapsible partition the first opening (20) of the duct (12) is coupled to one of the control fluid outlets (214), and the partition (10) extends across the vehicle compartment (200) to divide the vehicle compartment (200) into the first part (206) and the second part (208);
wherein the vehicle compartment (200) has a plurality of installation positions in which the partition (10) can be installed in the installed configuration, and wherein the partition (10) is moveable within the vehicle compartment (200);
wherein a subset of the control fluid outlets (214) is associated with a subset of the installation positions.

2. The vehicle compartment control arrangement according to claim 1, wherein the ducted portion comprises a plurality of ducts (12), each extending within the partition (10) and arranged to convey the control fluid from a first opening (20) at a first end of the duct to a second opening (22) at a second end of the duct (12).

3. The vehicle compartment control arrangement according to claim 1 or 2, further comprising:
a support (14) arranged to be coupled to the vehicle compartment (200); and
a duct wall (16) which at least partly defines the duct (12), wherein the duct wall is supported by the support (14).

4. The vehicle compartment control arrangement according to claim 3, wherein the support (14) is composed of a first material, and wherein the duct wall (16) is composed of a second different material.

5. The vehicle compartment control arrangement according to claim 3 or 4, wherein the support (14) is of a first thickness, and wherein the duct wall (16) is of a second different thickness.

6. The vehicle compartment control arrangement according to any one of the preceding claims, wherein the partition (10) is at least partly composed of textile materials or a textile material.

7. The vehicle compartment control arrangement according to any one of the preceding claims, further comprising a controller (304) configured to control the temperature of the control fluid relative to a first part reference temperature.

8. A vehicle comprising a compartment control arrangement according to any one of the preceding claims.

9. The vehicle according to claim 8, wherein the vehicle is an aircraft (100).

10. A method of partitioning a vehicle compartment (200) into two parts (206, 208) using a vehicle compartment control arrangement according to any one of the claims 1 to 7, comprising the steps of:
installing the partition (10) in the installed configuration within the vehicle compartment (200);
controlling a supply of a control fluid to the duct (12) of the partition (10);
controlling the temperature of the control fluid relative to a first part (206) reference temperature and a second part (208) reference temperature, thereby controlling the heat
transfer between the partition (10) and at least one of the two parts (206, 208) of the vehicle compartment (200).

11. The method according to claim 10, wherein said controlling the temperature of the control fluid comprises:
setting the control fluid temperature greater than the second part reference temperature when the first part reference temperature is greater than the second part reference temperature; and
setting the control fluid temperature to less than the second part reference temperature when the first part reference temperature is less than the second part reference temperature.

## Patentansprüche

1. Anordnung zur Abteilsteuerung eines Fahrzeugs, aufweisend:
eine zusammenlegbare Trennwand (10), welche eine zusammengelegte Konfiguration und eine eingebaute Konfiguration besitzt, bei welcher sie eingerichtet ist, ein Fahrzeugabteil (200) in zwei Abschnitte (206, 208) zu teilen, wobei die Trennwand Folgendes aufweist: einen Kanalabschnitt, welcher mindestens einen Kanal (12) aufweist, wobei sich der Kanal (12) innerhalb der Trennwand (10) von einer ersten Öffnung (20) an einem ersten Ende des Kanals (12) zu einer zweiten Öffnung (22) an einem zweiten Ende des Kanals (12) erstreckt; wobei der Kanal (12) eingerichtet ist, um ein Steuerfluid zu transportieren, um die Wärmeübertragung zwischen der Trennwand (10) und mindestens einem der beiden Abschnitte (206, 208) des Fahrzeugabteils (200) zu steuern;
**dadurch gekennzeichnet, dass** das Fahrzeugabteil (200) Folgendes aufweist:
eine Vielzahl von Steuerfluid-Auslässen (214), welche jeweils eingerichtet sind, um wahlweise mit der ersten Öffnung (20) des Kanals (12) verbunden zu werden und einen Strom von Steuerfluid in den Kanal (12) bereitzustellen;
wobei bei der eingebauten Konfiguration der zusammenlegbaren Trennwand die erste Öffnung (20) des Kanals (12) mit einem der Steuerfluid-Auslässe (214) verbunden ist und die Trennwand (10) sich über das Fahrzeugabteil (200) erstreckt, um das Fahrzeugabteil (200) in den ersten Abschnitt (206) und den zweiten Abschnitt (208) zu teilen;
wobei das Fahrzeugabteil (200) eine Vielzahl von Einbaupositionen aufweist, in welchen die Trennwand (10) in der eingebauten Konfiguration eingebaut werden kann und wobei die Trennwand (10) innerhalb des Fahrzeugabteils (200) beweglich ist;
wobei eine Untermenge der Steuerfluid-Auslässe (214) mit einer Untermenge der Einbaupositionen verknüpft ist.

2. Anordnung zur Abteilsteuerung eines Fahrzeugs nach Anspruch 1, wobei der Kanalabschnitt eine Vielzahl von Kanälen (12) aufweist, welche sich jeweils innerhalb der Trennwand (10) erstrecken und eingerichtet sind, um das Steuerfluid von einer ersten Öffnung (20) an einem ersten Ende des Kanals zu einer zweiten Öffnung (22) an einem zweiten Ende des Kanals (12) zu transportieren.

3. Anordnung zur Abteilsteuerung eines Fahrzeugs nach Anspruch 1 oder 2, weiter aufweisend:
einen Träger (14), welcher eingerichtet ist, mit dem Fahrzeugabteil (200) verbunden zu werden; und
eine Kanalwand (16), welche zumindest teilweise den Kanal (12) definiert, wobei die Kanalwand vom Träger (14) gehalten wird.

4. Anordnung zur Abteilsteuerung eines Fahrzeugs nach Anspruch 3, wobei der Träger (14) aus einem ersten Material gebildet ist, wobei die Kanalwand (16) aus einem zweiten, unterschiedlichen Material gebildet ist.

5. Anordnung zur Abteilsteuerung eines Fahrzeugs nach Anspruch 3 oder 4, wobei der Träger (14) eine erste Dicke aufweist und wobei die Kanalwand (16) eine zweite, unterschiedliche Dicke aufweist.

6. Anordnung zur Abteilsteuerung eines Fahrzeugs nach einem der vorhergehenden Ansprüche, wobei die Trennwand (10) zumindest teilweise aus textilen Materialien oder einem textilen Material gebildet ist.

7. Anordnung zur Abteilsteuerung eines Fahrzeugs nach einem der vorhergehenden Ansprüche, weiter aufweisend eine Steuereinheit (304), welche dafür ausgelegt ist, um die Temperatur des Steuerfluids in Bezug auf eine Bezugstemperatur des ersten Abschnitts zu steuern.

8. Fahrzeug, aufweisend eine Anordnung zur Abteilsteuerung nach einem der vorhergehenden Ansprüche.

9. Fahrzeug nach Anspruch 8, wobei das Fahrzeug ein Flugzeug (100) ist.

10. Verfahren zum Abtrennen eines Fahrzeugabteils (200) in zwei Abschnitte (206, 208) unter Verwendung einer Anordnung zur Abteilsteuerung eines Fahrzeugs nach einem der Ansprüche 1 bis 7, aufweisend die folgenden Schritte:
Einbauen der Trennwand (10) in der eingebauten Konfiguration innerhalb des Fahrzeugabteils (200);
Steuern einer Versorgung eines Steuerfluids zum Kanal (12) der Trennwand (10);
Steuern der Temperatur des Steuerfluids in Bezug auf eine Bezugstemperatur des ersten Abschnitts (206) und eine Bezugstemperatur des zweiten Abschnitts (208), wobei dabei die Wärmeübertragung zwischen der Trennwand (10) und zumindest einem der beiden Abschnitte (206, 208) des Fahrzeugabteils (200) gesteuert wird.

11. Verfahren nach Anspruch 10, wobei das Steuern der Temperatur des Steuerfluids umfasst:
Einstellen der Temperatur des Steuerfluids größer als die Bezugstemperatur des zweiten Abschnitts, wenn die Bezugstemperatur des ersten Abschnitts größer als die Bezugstemperatur des zweiten Abschnitts ist; und
Einstellen der Temperatur des Steuerfluids kleiner als die Bezugstemperatur des zweiten Abschnitts, wenn die Bezugstemperatur des ersten Abschnitts kleiner als die Bezugstemperatur des zweiten Abschnitts ist.

## Revendications

1. Agencement de régulation de compartiment d'un véhicule, l'agencement comprenant :
une cloison démontable (10) pourvue d'une configuration démontée et d'une configuration installée dans laquelle elle est conçue pour diviser un compartiment (200) du véhicule en deux parties (206, 208), et
un compartiment (200) du véhicule,
dans lequel la cloison comprend :
une portion à gaines comprenant au moins une gaine (12), la gaine (12) s'étendant à l'intérieur de la cloison (10) depuis une première ouverture (20) à une première extrémité de la gaine (12) jusqu'à une deuxième ouverture (22) à une deuxième extrémité de la gaine (12) ;
dans lequel la gaine (12) est conçue pour acheminer un fluide de régulation destiné à réguler le transfert de chaleur entre la cloison (10) et au moins une des deux parties (206, 208) du compartiment (200) du véhicule ;
l'agencement étant **caractérisé en ce que** le compartiment (200) du véhicule comprend :
une pluralité de bouches (214) de fluide de régulation, chacune conçue chacune pour être couplée de façon sélective à la première ouverture (20) de la gaine (12) et pour introduire un flux de fluide de régulation dans la gaine (12) ;
dans lequel, dans la configuration installée de la cloison démontable, la première ouverture (20) de la gaine (12) est couplée à l'une des bouches (214) de fluide de régulation, et la cloison (10) s'étend en travers du compartiment (200) du véhicule de façon à diviser le compartiment (200) du véhicule en la première partie (206) et la deuxième partie (208) ;
dans lequel le compartiment (200) du véhicule adopte une pluralité de positions d'installation permettant d'installer la cloison (10) dans la configuration installée, et la cloison (10) est mobile à l'intérieur du compartiment (200) du véhicule ;
dans lequel un sous-groupe des bouches (214) de fluide de régulation est associé à un sous-groupe des positions d'installation.

2. Agencement de régulation de compartiment d'un véhicule selon la revendication 1, dans lequel la portion à gaines comprend une pluralité de gaines (12), chacune s'étendant à l'intérieur de la cloison (10) et étant conçue pour acheminer le fluide de régulation depuis une première ouverture (20) au niveau d'une première extrémité de la gaine jusqu'à une deuxième ouverture (22) au niveau d'une deuxième extrémité de la gaine (12).

3. Agencement de régulation de compartiment d'un véhicule selon la revendication 1 ou 2, comprenant en outre :
un support (14) conçu pour être couplé au compartiment (200) du véhicule ; et
une paroi (16) de gaine qui définit au moins partiellement la gaine (12), le support (14) servant de support à la paroi de gaine.

4. Agencement de régulation de compartiment d'un véhicule selon la revendication 3, dans lequel le support (14) se compose d'un premier matériau, et dans lequel la paroi (16) de gaine se compose d'un deuxième matériau différent du premier.

5. Agencement de régulation de compartiment d'un véhicule selon la revendication 3 ou 4, dans lequel le support (14) possède une première épaisseur, et dans lequel la paroi (16) de gaine possède une deuxième épaisseur différente de la première.

6. Agencement de régulation de compartiment d'un véhicule selon l'une quelconque des revendications précédentes, dans lequel la cloison (10) se compose au moins en partie de matériaux textiles ou d'un matériau textile.

7. Agencement de régulation de compartiment d'un véhicule selon l'une quelconque des revendications précédentes, comprenant en outre un régulateur (304) configuré pour réguler la température du fluide de régulation par rapport à une température de référence de la première partie.

8. Véhicule comprenant un agencement de régulation de compartiment selon l'une quelconque des revendications précédentes.

9. Véhicule selon la revendication 8, lequel véhicule est un aéronef (100).

10. Procédé de cloisonnement d'un compartiment (200) d'un véhicule en deux parties (206, 208) au moyen d'un agencement de régulation de compartiment d'un véhicule selon l'une quelconque des revendications 1 à 7, comprenant les étapes consistant à :
installer la cloison (10) dans la configuration installée à l'intérieur du compartiment (200) du véhicule ;
réguler une alimentation de la gaine (12) de la cloison (10) en un fluide de régulation ;
réguler la température du fluide de régulation par rapport à une température de référence de la première partie (206) et à une température de référence de la deuxième partie (208), de manière à réguler le transfert de chaleur entre la cloison (10) et au moins une des deux parties (206, 208) du compartiment (200) du véhicule.

11. Procédé selon la revendication 10, dans lequel ladite étape consistant à réguler la température du fluide de régulation comprend les étapes consistant à :
régler la température du fluide de régulation sur une valeur supérieure à la température de référence de la deuxième partie si la température de référence de la première partie est supérieure à la température de référence de la deuxième partie ; et
régler la température du fluide de régulation sur une valeur inférieure à la température de référence de la deuxième partie si la température de référence de la première partie est inférieure à la température de référence de la deuxième partie.
